Europäisches Patentamt

European Patent Office

Office européen des brevets

(19)

(11) Publication number: **0 071 143**

**A1**

# (12) EUROPEAN PATENT APPLICATION

(21) Application number: 82106483.9

(22) Date of filing: 19.07.82

(51) Int. Cl.³: **G 01 N 21/43**

(30) Priority: 31.07.81 US 289109

(43) Date of publication of application:
09.02.83 Bulletin 83/6

(84) Designated Contracting States:
CH DE FR GB IT LI NL

(71) Applicant: High Voltage Engineering Corporation
South Bedford Street
Burlington Massachusetts 01803(US)

(72) Inventor: Bartky, Walter
5445 North Sheridan Road
Chicago Illinois 60640(US)

(72) Inventor: Stackhouse, Gerald
2 Jeremy Hill Road
Pelham New Hampshire 03076(US)

(74) Representative: Heidrich, Udo, Dr. jur., Dipl.-Phys.
Franziskanerstrasse 30
D-8000 München 80(DE)

(54) Refractometer.

(57) A refractometer for estimating the refractive index of a substance on the basis of light reflected from an interface (83) between a prism (80) and the substance (82) or refracted into the substance (82), including an intensity profile detector (88) for the reflected or refracted rays throughout a range of angles of incidence of the rays, and an intensity profile analyzer for locating a singular property of the resultant intensity profile curve as a function of a multiplicity of at least three intensity values along the intensity profile and for indicating the index of refraction of the substance (82) from the location of the singular property, and a method of determining refractive index and of controlling a process using corresponding method techniques. In preferred embodiments: the analyzer is adapted to form derivatives of the resultant intensity profile curve; the singular property is an approximate singularity of the first derivative, which is located by determining the point where the second derivative crosses zero; and the prism (80) comprises a section of a cylinder, the interface (83) being a curved surface thereof in which the intensity profile shifts linearly along the image plane (30) with change in the critical angle $\theta_c$ albeit with partially reflected rays that fall both above and below the point that corresponds with the critical angle position $\theta_c$.

./...

Croydon Printing Company Ltd.

FIG 13

DIPL.-PHYS. DR. JUR. U. HEIDRICH
Franziskanerstr. 30
D - 8000 MÜNCHEN 80

HIGH VOLT. - EPC
Refractometer

0071143

## Field of the Invention

This invention relates to refractometers.

## Background of the Invention

The refractive index of a medium is the ratio of the velocity of light in a vacuum to that in the medium. Each chemical composition, concentration of solution, or purity of material has its own "signature" refractive index that is constant at constant temperature and constant wavelength. Refractometers are devices employed to determine the refractive index of a variety of materials both in the laboratory and in process control.

In practice, an incident monochromatic ray strikes a refractive index boundary between two media having refractive indices of $N_d$ and $N_s$. If the incident ray in the $N_d$ medium strikes the boundary at an incident angle $\theta_i$ (measured perpendicular to the boundary), it is broken into two rays, the refracted ray, which emerges into the $N_s$ medium at an angle $\theta_r$ and the reflected ray which enters back into the $N_d$ medium at the same angle it struck, i.e. $\theta_i$. The formula which specifies the relationship between the incident angles and the refractive indices is known as Snell's Law, which states that the product of the incident refractive index times the sine of the incident angle is equal to the sine of the angle of the refracted ray times its refractive index in the media, which may be stated:

$$N_s \sin \theta_r = N_d \sin \theta_i$$

If $N_s$ is less than $N_d$, then a critical angle $\theta_c$ may be defined as the point where the angle of the refracted ray is 90°:

$$N_s \sin 90° = N_s = N_d \sin \theta_c$$

The sum of the energies of the two rays (reflected and refracted) is equal to the total energy of the incident ray. The closer the angle of incidence $\theta_i$ approaches to the critical angle $\theta_c$, the larger the ratio of reflected energy to refracted energy becomes. When the ray is totally reflected off a surface, i.e. at angle of incidence $\theta_c$, the reflected ray has the same energy as the incident ray. When it is partially reflected, the Fresnel equations give the intensity of the reflected ray in medium $N_d$ at any angle of incidence.

The critical angle $\theta_c$ which may be used to determine the signature refractive index is also the point at which the energy of the refracted ray vanishes, i.e. lies parallel to the surface. A ray striking the media at $\theta_c$ is totally reflected off the surface at $\theta_c$ and the refracted ray's energy is zero. Rays striking at angles of incidence greater than $\theta_c$ are totally reflected, rays striking at angles below $\theta_c$ are partially reflected and partially refracted.

The purpose of a refractometer is to measure $N_s$. One approach might be to measure both $\theta_i$ and $\theta_r$ and calculate $N_s$ from Snell's law. The more common approach is to find $\theta_c$, using either reflection or transmission techniques.

Most prior art techniques employ flat plane prisms, which totally reflect all rays at angles of incidence above $\theta_c$, in attempts to locate the critical angle $\theta_c$ where the refractive energy goes to zero. Such prior art devices generally fall into two classes. As applied to reflection refractometers, the first class attempts to convert the intensity profile of the reflected rays into an intensity level. The level is then scanned optically by moving the photocell or moving the source. The net measurement of the totally reflected ray is set to unity. The point at which the energy on the cell is detected as falling below that point is used to report the refractive index. The second class of devices involve techniques employing two photocells. One cell continuously monitors the energy in the totally reflected region while the second cell has the reflected shadow imaged on it. A comparison is made between the intensity levels and the angle is converted to the refractive index via a calibration mechanism. Both systems involve the use of two values and measure the intensity as a function of what it would be if no material were present. Neither type of system involves finding the actual critical angle but rather interpolates from an angle at which the energy of the reflected beam has dropped below a certain level.

An example of a reflective system used in the field is Model 47 Refractometer manufactured by Anacon, Inc. It employs a flat prism interface, a light source, a sample photo responsive element and a comparison photo responsive element. The comparison element is in the region of totally reflected rays, the shadow is imaged upon the sample element and electronic circuitry is used to convert the shadow into a proportional voltage which is converted into the refractive index.

Another system (U.S. patent No. 3,923,401) shows a differential photocell arrangement employed to detect the critical angle boundary. The photocells are moved up and down, a differential comparison is made between two cells and the critical angle is determined based upon the position of the cells.

Another similar system (U.K. 2,008,793) using a curved (referred to here as the Geake) prism has been proposed using a multiplicity of fixed photo sensors of which two sensors out of the multiplicity are used to determine the refractive index. Efforts with this system by others have not produced a satisfactory refractometer. (For description of the Geake prism see OPTICAL PROPERTIES OF THE LINEAR AND CRITICAL REFRACTOMETER, by J. E. Geake, OPTICA ACTA, 1970, Vol. 17, No. 5 pp. 363-380.)

- 4 -

Objectives of this invention are to overcome inaccuracies and other drawbacks of such prior art instruments.

### Summary of the Invention

The invention relates to a refractometer comprising a prism having a face exposed for interfacial contact with a substance whose index of refraction is to be measured, a light source for directing rays of light through the prism over a range of angles toward the interface with the substance, a detector for detecting the rays of light that are either reflected from the interface through the prism or refracted into the medium, and means for estimating the refractive index of the substance on the basis of the energy profile of the reflected or refracted light.

According to the invention, the device comprises means for detecting an intensity profile of the reflected or refracted rays throughout a range of angles of incidence of the rays and intensity profile analyzer means adapted to locate the position of a singular property of the resultant intensity profile curve as a function of a multiplicity of at least three intensity values, preferably five or more, along the detected intensity profile and for indicating the index of refraction of the substance (or a related property) from the location of this property.

Viewed in one way, the invention takes advantage of the realization that detected rays not only at the critical angle, but also those at angles of incidence at various angles below the critical angle can be useful in the determination of the exact location of the critical angle because all such angles represent points on the energy distribution curve predicted by the Fresnel equations for the particular substance at hand. The invention can then be viewed as a voting scheme, in which energy values at multiple points at or below the critical angle are caused to "vote" for the refractive index $N_s$, e.g. by voting for the true position of the critical angle or other singular property of the intensity profile.

Although an ideal fluid has a point of true mathematical singularity in the first derivative of its intensity profile, in practice, this singularity due to optical diffraction effects, is spread out and becomes a point of inflection, i.e. a maximum first derivative. The true mathematical singularity is only a result of the theory as predicted by Snell's Law. According to the preferred embodiment of the invention, the location of the point of singularity, though its ideal form does not occur, is determined according to curve fitting principles using 3 or more points to determine the inflection point. According to the broader aspects of the invention, however, other singular properties of the curve may also be employed to produce a point which is a function of a multiplicity of points along the curve. For instance, a pattern recognition means can be used in place of determining the critical angle $\theta_c$. Such recognition means operates on the criteria that the point computed must be repeatable, that is, that it remain constant if the sample is constant, and that the point be correlated to the refractive index of the substance being measured. Following these criteria, the instrument can be used to report to the user the refractive index of the substance being measured, by use of a pattern recognition algorithm, by operating on a sizable number of points along the energy profile.

Regardless of the means of implementation chosen for analyzing the curve of the intensity profile, the profile can be produced either with transmission or reflecting arrangements. In a transmission arrangement, the detector is mounted to receive the refracted rays from the substance and means are provided to measure the intensity profile of the refracted rays, obtain the singular property, (singular being in the sense of determining a recognizable point on the curve from a multiplicity of points) and convert that to the refractive index of the substance. In the preferred reflecting arrangement, means are provided to measure the intensity profile of the reflected rays from the substance. In the preferred embodiment the measurement of the reflected energy is advantageous in that a no-sample measurement can be made and the normalized intensity can be obtained. In a transmission instrument, the problem of detecting the refracted rays is somewhat encumbered by not having an initial intensity profile. However, this intensity profile for the refracted rays in the event of no-sample can be obtained by precalibrating the instrument and storing the precalibration data in a read-only memory. Thus when the instrument is put into service this data would always be available for the analysis. The instrument could then simply substract the refracted energy from the reflected energy and enter the same algorithm to compute the refractive index.

In preferred embodiments, the intensity profile analyzer means of the invention is implemented as a derivative forming means for forming derivatives of the detected intensity profile curve, and is adapted to determine the critical angle as the point of approximate singularity of the first derivative of the detected curve, by the formation of at least two derivatives employing altogether at least three points on the detected intensity profile curve, or preferably at least five points to accommodate quantizing noise of the analyzer means. In preferred embodiments more than ten points are employed. Preferably this derivative forming means is actually constructed to form a series of second derivatives of the detected intensity profile curve, and decision means of the analyzer means is adapted to determine the location of the first derivative singularity as the point where the second derivative crosses zero value. Also, in preferred embodiments, the device includes scanning means for scanning the detected intensity profile for a general region of interest in which the singularity is predicted to occur, and the analyzer means is adapted thereafter to form and analyze derivatives of the curve in that region of interest, with a dynamic search scheme of progressively adjusted values. Preferably, the device of the invention includes normalization means for comparing the measured profile against a reference profile to remove variations attributable to variations in the light intensity attributable to the light source.

In one particular preferred embodiment the prism comprises a section of a cylinder, (a Geake prism) the interface being along the curved surface of the cylinder, the prism itself focusing a critical angle ray perpendicular to the image plane of the prism that lies on a radius of the cylinder, the partially reflected rays striking on the prism image plane both above and below the critical angle ray, depending upon the position of the source ray along the curve, the location of the critical angle ray progressing linearly along the image plane with the refractive index. According to the invention it is realized that in such a prism there is indeed only a single ray originating at the critical angle of incidence that can fall perpendicularly upon the image plane, and which progresses along the image plane in a linear manner with change in refractive index of the unknown medium. In other words the energy of the meaningful ray at that precise point goes to zero, or stated another way, the effective aperture at that point is zero. To determine the critical angle for instruments using the Geake prism, according to the

- 8 -

invention a multiplicity of measured values of the detected intensity profile at points removed from the point of maximum intensity of the intensity profile are employed by the analyzer means. Preferably for this purpose the analyzer is adapted to select the region of interest initially to be analyzed as the range of points on the detected profile between about 70 and 90% of maximum normalized intensity.

In another embodiment the prism is a flat prism, and the analyzer means is adapted to select the initial region of interest as the points in the normalized intensity profile between about 80 and 100% of maximum intensity.

In various preferred embodiments the light source is monochromatic; the light source is of the dual point type to facilitate optical alignment; the device includes means for compensation for dark current characteristics of the detector; and the detector includes a linear array of discrete sensor elements.

According to a process control method of the invention, the critical angle is determined and a process condition, e.g. a concentration of an ingredient in a mixture, is varied to maintain refractive index at a desired value, by performing the steps that include detecting an intensity profile of the reflected or refracted rays through a range of angles of incidence of the rays, and analyzing the intensity profile by forming at least two derivatives of the resultant intensity profile curve as a function altogether of a multiplicity of at least three (preferably five, and most preferably in excess of ten) intensity values along the intensity profile for locating the approximate singularity of the first derivative, and indicating the index of refraction of the substance from the location of the singularity.

In preferred embodiments of the method, the second derivative of the curve is formed to determine the location of the first derivative singularity as the point where the second derivative crosses zero value; and the method includes the prior step of scanning the intensity profile for a predetermined region of interest for intensity profile analysis.

These and other objects and features of the invention will be understood from the following description of a preferred embodiment.

### Preferred Embodiment

#### Drawings

Fig. 1 is a diagram of an incident ray striking a refractive index boundary between two media at an angle of partial reflection;

Fig. 2 is a diagram of an incident ray striking a refractive index boundary between two media at the critical angle;

Fig. 3 is a diagram of a plurality of incident rays at progressively greater angles striking a refractive index boundary;

Fig. 4 is a graph of reflected ray intensity from a point source as a function of angle of incidence about the critical angle, including partially refracted ray intensities according to the Fresnel equations;

Fig. 5 is a diagram of incident rays from a non-point source striking a refractive index boundary of a flat prism at the critical angles (solid lines) and at greater (dashed lines) and lesser (dotted lines) angles and reflected and focused onto an image plane;

Fig. 6 is a profile of the intensity of the TIR (totally internally reflected) rays shown in Fig. 5, Fig. 7 is a profile of the intensity of partially reflected rays focused on the image plane and Fig. 8 is a profile of the summation of the curves of Figs. 6 and 7;

Fig. 9 is a diagram of incident rays from a non-point source striking a refractive index boundary of

- 10 -

a curved Geake-type prism about the critical angle and reflected onto an image plane;

Fig. 10 is a profile of the intensity of the TIR rays shown in Fig. 9 focused on the image plane, Fig. 11 is a profile of intensity of partially reflected rays, and Fig. 12 is a profile of the summation of the curves of Figs. 10 and 11;

Fig. 13 is a block diagram of a preferred embodiment of the analyzer system of the invention;

Fig. 14 is a perspective view of the optical system of the instrument of the preferred embodiment;

Fig. 15 is a flow chart of the steps of the analyzer program;

Fig. 16 is a global intensity profile of the diode rays shown with, BB, and without, AA, a sample; and normalized, DD; and

Fig. 17A is a region about the critical angle of said sample, while Figs. 17B and 17C are graphs of the second and first derivatives, respectively, of the curve in the region of interest of Fig. 17A.


Reflection and Refraction in General

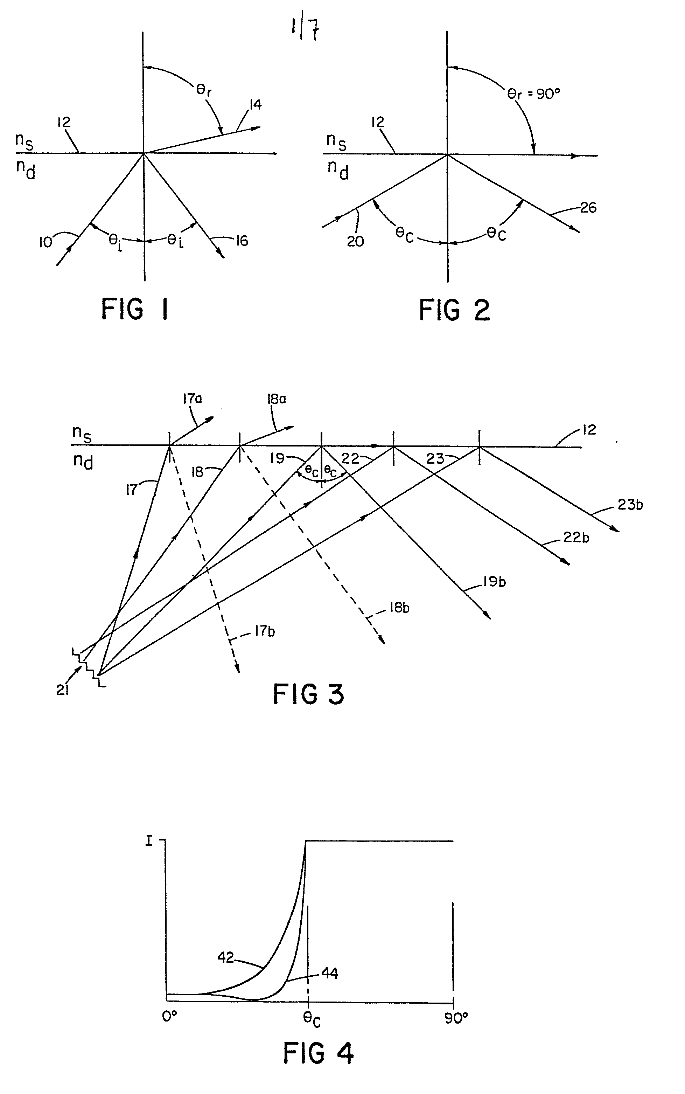

In Fig. 1, incident ray 10 strikes a refractive index boundary 12 of two media having refractive indices $N_d$ and $N_s$, where $N_s$ is less than $N_d$. Incident ray 10 strikes the boundary at incident angle $\theta_i$ and is broken into two rays, the refracted ray 14, which emerges into the media having index $N_s$ at $\theta_r$, and the reflected ray 16, which enters back into the media having index $N_d$ at the same angle, i.e. angle $\theta_i$.

According to Snell's Law:

$$N_s \sin \theta_r = N_d \sin \theta_i \qquad (1)$$

the sum of the energies of reflected 16 and refracted ray 14 is equal to the total energy of incident ray 10. When ray 10 is totally reflected off boundary 12, ray 16 would have the same energy as the incident ray. When

- 11 -

partially reflected, the Fresnel equations give the intensity of reflected ray 16 in media having index $N_d$.

The critical ray is the incident ray which strikes the refractive index boundary at a critical angle $\theta_c$ (Fig. 2) at which the energy of refracted ray first becomes zero, e.g. $\theta_r$ would be 90°. In Fig. 2, a single critical angle ray 20 strikes the media boundary 12 at angle $\theta_c$ and is totally reflected off the surface, ray 26, at angle $\theta_c$. The refractive energy is zero. Thus, $\theta_r$ in formula 1 is 90°, and because the sin of a 90° angle is equal to 1, Snell's Law reduces to:

$$N_s = N_d \sin \theta_c. \tag{2}$$

Reflection and Refraction at a Planar Surface

Fig. 3 shows a multiplicity of rays from source 21 striking the same $N_d$, $N_s$ boundary 12. The rays 17, 18, 19, 22, 23 strike boundary 12 at progressively increasing angles of incidence as measured perpendicular to the boundary. Rays 17 and 18 strike boundary 12 at angles much less than $\theta_c$. The rays are refracted 17a and 18a (solid lines) and partially reflected 17b and 18b (dashed lines), of course at the same angles of incidence. Ray 19 strikes boundary 12 at critical angle $\theta_c$, the angle of the refracted ray is 90° and the energy is zero. Rays 22 and 23 strike boundary 12 at angles greater than $\theta_c$ and are totally reflected, 22b, 23b, respectively, at the same angles.

The intensity profile of reflected rays from a point source (or the focused image of parallel rays from a planar reflective surface) is shown in Fig. 4. Rays of angles of incidence from 0 to 90° correspond to the horizontal axis, their reflected intensities correspond to the vertical axis. Any ray whose angle of incidence is greater than the critical angle, $\theta_c$, is totally reflected with the maximum normalized intensity. The

- 12 -

rays that are partially reflected have partial energies
governed by the Fresnel equations (one for perpendicular
polarization $R_1$, one for parallel polarization $R_2$)
which are stated:

$$R_1 = \frac{\tan^2 (\theta_i - \theta_r)}{\tan^2 (\theta_i + \theta_r)} \tag{3}$$

$$R_2 = \frac{\sin^2 (\theta_i - \theta_r)}{\sin^2 (\theta_i + \theta_r)} \tag{4}$$

The actual intensity is not the average but a vector
sum. It suffices to show only the two components. The
lines 42, 44 show the perpendicular and parallel
polarized components, respectively, of the partially
reflected rays.

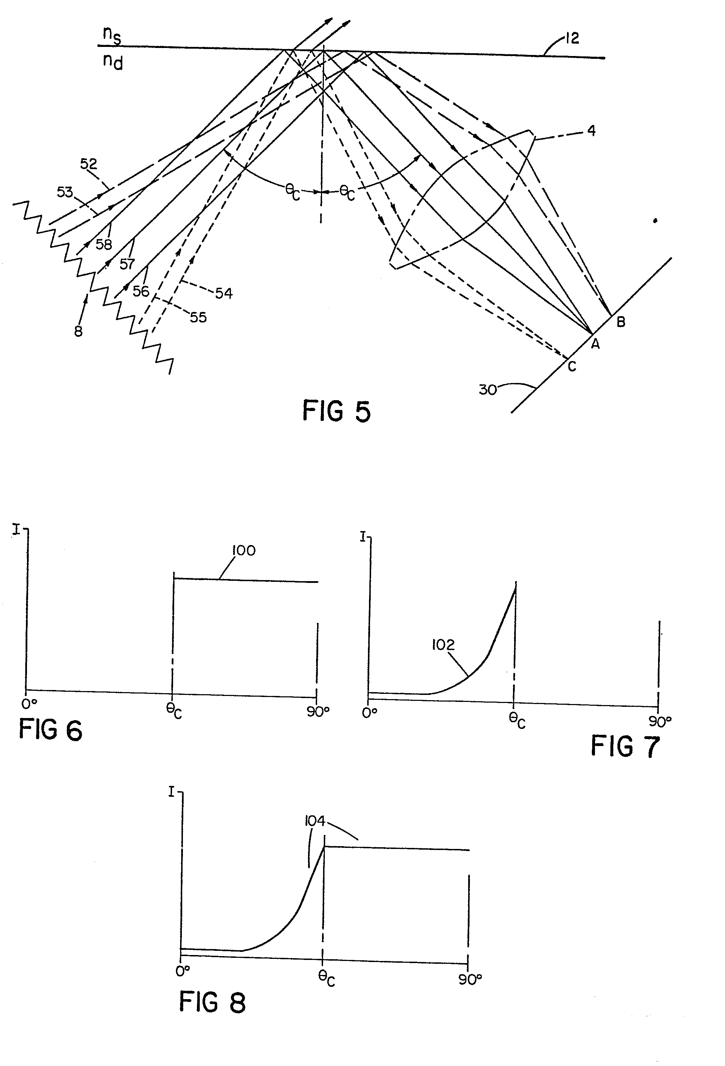

Fig. 5 represents a flat prism device having an
extended source 8, a refractive index interface 12, a
focusing lens 4 and an image plane 30. The lens
accumulates the parallel rays at each angle and maps
them at respective points on the image plane 30 to
provide an intensity profile that can be detected. The
rays 56, 57, 58 depicted in solid lines in Fig. 5 strike
the surface at critical angle $\theta_c$. They are collected
by lens 4 and focused at single point A. Other rays,
e.g. 52,53 (shown in dashed lines) strike the surface at
a given angle greater than $\theta_c$, are reflected in
parallel and focused on image plane 30 at point B.
Similarly, rays 54,55 (shown in dotted lines) incident
at a given angle less than are partially reflected in
parallel and are focused below point A at C on image
plane 30. Thus an aggregate of parallel rays
contributes to the intensity at each point along the
image plane, and any ray striking the surface will be
mapped onto the image plane with the partially reflected
rays falling below point A, i.e. $\theta_c$, in the image
plane while totally reflected rays fall above.

Fig. 6 shows the intensity profile curve 100 of
totally internally reflected rays; Fig. 7 shows the intensity profile curve 102 of the partially reflected rays; and Fig. 8 shows the curve 104 of the summation, i.e. the intensity profile that is imaged on plane 30, Fig. 5.

Flat Prism: Determination of $\theta_c$ by Determination of Singularity of First Derivative

The intensity curve 100 of Fig. 8 is a step function and all rays at angles of incidence greater than the critical angle $\theta_c$ are 100 per cent reflected. The curve is very flat above $\theta_c$ and falls off quite rapidly below $\theta_c$. Use is made according to the invention of the fact that the exact point where the first derivative of this curve goes to infinity (referred to in mathematical terms as a point of "singularity") corresponds precisely to $\theta_c$. According to a preferred embodiment of the invention, by performing analysis of this region of the detected curve (requiring at least 3 and preferably many more points on the detected intensity profile curve in the region of interest) the location of the point of singularity is determined and the refractive index of the media $N_s$ is then established directly by Snell's Law (Formula 2).

Geake Prism

Despite a very different distribution of rays at the image plane of the Geake-type prism, it is realized that determination of the point of singularity of the first derivative of the Geake intensity profile at that plane also can lead to an accurate determination of $\theta_c$ and the refractive index of the unknown material.

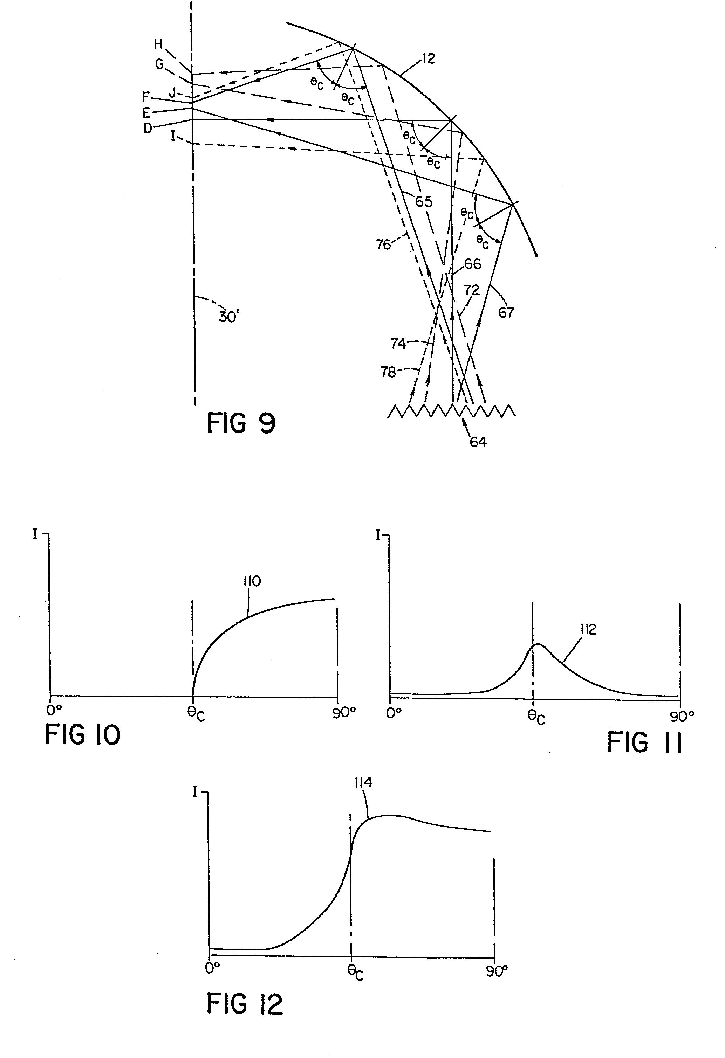

Referring now to Fig. 9, a Geake prism has a source 64, a cylindrical interface 12 between medias having refractive indices $N_d$ and $N_s$ and an image plane 30' lying on a radius of the cylinder. Three critical angle rays 65, 66 and 67 are emitted by source 64. Ray 66 strikes the image plane 30' at a right angle at point D. Rays 65,67 although they are also critical angle rays, do not strike the image plane at the same point as 66, but strike above in a region of greater intensity, i.e. at points E and F, and are not perpendicular to the image plane. The fact that only one ray is perpendicular to the image plane 30' at an angle corresponding to the critical angle is realized (and accommodated). The aperture in such a case is said to be zero, the intensity is also zero, and the intensity profile of the set of totally reflected rays can be shown to be generally as illustrated in Fig. 10. The intensity profile of the totally reflected rays is zero at the critical angle point $\theta_c$ and increases in the region above the critical angle. Incident rays 72 and 74 (shown as dashed lines in Fig. 9) strike boundary 12 at angles greater than $\theta_c$ and are totally reflected onto image plane 30' at points G, H, above $\theta_c$, i.e. above point D.

The case is not similar for rays 76 and 78 (dotted lines) which strike boundary 12 at angles less than $\theta_c$ and are partially reflected. Ray 78, lands at point I, below $\theta_c$ similarly to partially reflected rays in the flat prism interface. However, ray 76, although also only partially reflected, lands at point J above $\theta_c$, among the rays that were totally reflected. The total intensity profile of the partially reflected rays, Fig. 11, is, therefore, much more complicated than in the case of the flat prism and spreads out over the image plane. The amount of spreading is a function of the material, where $\theta_c$ is being mapped, the source, and other factors in the optical system. Summarizing, the intensity curve 112 of Fig. 11 is a representative plot of the partially reflected rays, Fig. 10 shows a plot of the intensity curve 110 of the totally reflected (TIR) rays, and Fig. 12 is a summation curve 114 of the

- 15 -

above. It is noted that the curve in Fig. 12 has a point of singularity corresponding to $\theta_c$ which is contributed by the plot of the TIR ray intensity (Fig. 10). A point of singularity here is referred to by its accepted meaning of a indeterminate derivative, covering both the case where the derivative goes to infinity and as well as the case where a derivative at a point in a curve will have different value depending upon the direction along the curve one is progressing when calculating the derivative.

In this summation of the two curves (114, Fig. 12) the singularity at $\theta_c$ appears more difficult to ascertain than in the flat prism device because it is not a sudden fall-off of intensity but is a gradual fall-off of intensity from the region to the right. The rays that are totally reflected contribute no information about the refractive index of the subject material. However, every partially reflected ray still is a function of the material and can be used to contribute to the measurement of refractive index. Therefore, rays on either side of $\theta_c$ are measured in order to accurately measure and report the refractive index.

In summary, the parameters of the Geake prism and the principles of selection in making refractometers according to this aspect of the invention are as follows.

The Geake prism, as noted, has essentially one interface surface, a curved surface, forming the boundary between the liquid to be measured and the prism which has the curved surface. This curved surface is a function of the desired range of refractive indexes to be measured. First, for transmitting Geake-type prisms, the curved surface containing the refractive index of the prism is higher than the sample to be measured. The range of the refractive index is lower than that of the prism and up to and including the refractive index of the prism iteslf. The principle of the Geake prism is
that the radius of curvature of its interface times the
refractive index range results in an image along the
radius of the curved cylinder. For example, assume the
refractive index range to be covered were 1.3 to 1.4
refractive index and the prism refractive index is 1.5.
To determine the radius of curvature, the formula would
be the radius of curvature of the prism times the
difference in refractive index range, in this case .1,
divided by the refractive index of the prism, in this
case 1.5, must be equal to 1/2 inch. Solving this
equation, the radius of curvature in this case is 7 1/2
inches.

Upon these principles the Geake prism can be
modeled for any desired sensor length and any desired
refractive index range until the optics are diffraction
limited. In a very small refractive index range, the
radius of curvature will be quite large. For a very
large refractive index range, the radius of curvature
will be quite small. Diffraction effects limit the
radius of curvature in practical embodiments to a few
meters. Beyond that point, the grinding tolerances in
controlling the radius of curvature begin to produce too
many alterations, and indeed, at very high radii of
curvature, one begins to approach a flat prism. Of
course, if a flat prism used magnifying optics, the
nonlinearity of the scale for a very small change in
refractive index could be ignored. Such is the case in
a Geake prism also.

Optical System

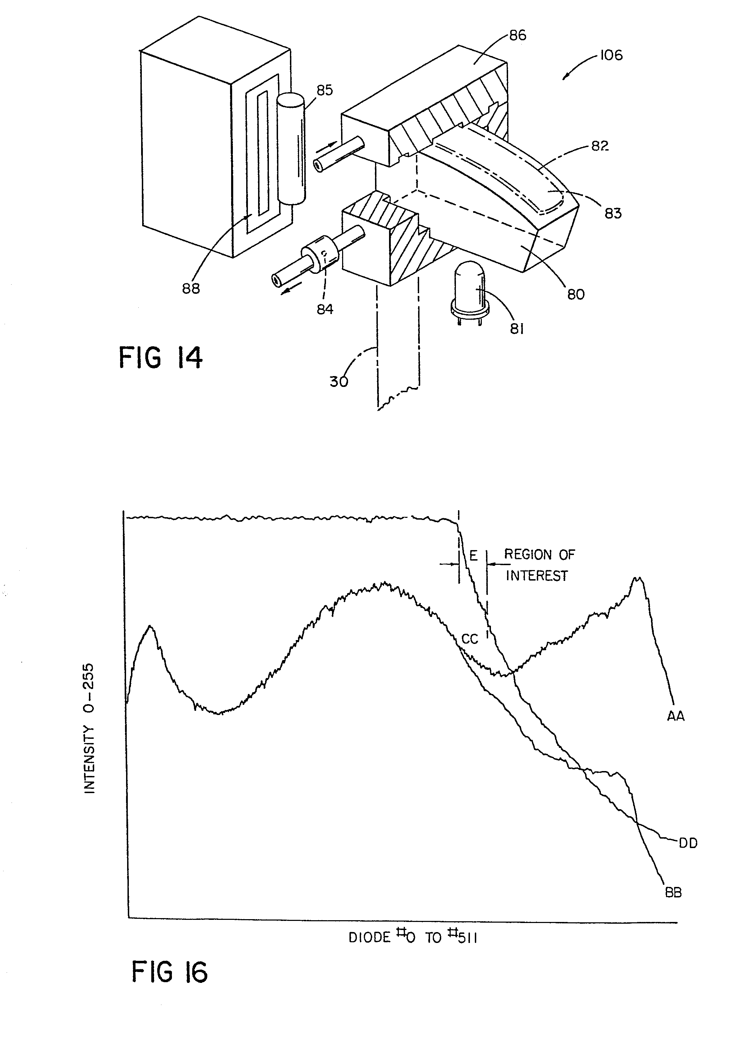

Fig. 14 shows the optical system 106 of the
instrument employing a Geake prism 80. Source 81 is a
yellow LED (light emitting diode) which emits light with
a peak intensity within 4 nanometers of monochromatic
sodium light and with a narrow band width. The use of
this source minimizes chromatic dispersion and enables the refractive indices to be measured at a narrow band of the light spectrum which accomodates the fact that a given material will have a different refractive index depending upon wavelength of the source.

The Geake-type prism 80, in addition to having characteristic effects on the intensity of reflected rays that result in reduced computation costs (as discussed below), has another advantage in that the prism's image plane is linearly related to the refractive index. This allows use of a lower cost array of detectors to image the shadow because there is no crowding effect at the high end of the scale as would be encountered in a standard flat prism design.

Referring to Fig. 14, sample 82 is squeezed as a film against the curved surface 83 of prism 80 and held at constant temperature by liquid recirculation through the lid 86 and the prism mounting block. The refractive index is also temperature sensitive, therefore the sample temperature is constantly monitored by temperature sensor 84, of the type AD590 supplied by Analog Devices of Massachusetts. Sensor array 88 consists of 512 photodiodes spread out linearly with uniform spacing over 1/2 inch at image plane 30. Cylindrical lens 85 increases the signal-to-noise ratio of recovered energy on the diodes.

Rays enter prism 80 from the source 81 and strike the prism/sample interface 83. A set of rays is reflected, and another sub-set is refracted. The total reflected rays and the partially reflected rays pass on through the prism. They are collected by lens 85 and focused onto the detector 88, which measures their intensity, i.e. energy.

In a selected embodiment the image plane covers the refractive index in the range 1.33 to 1.53 and the 512 detectors span the entire range, each detector roughly corresponding to .0004 RI (refractive index) units. The

- 18 -

photodiode array 88 is positioned so that the line of 512 individual photodiodes is at the image plane 30.

Instrument Structure

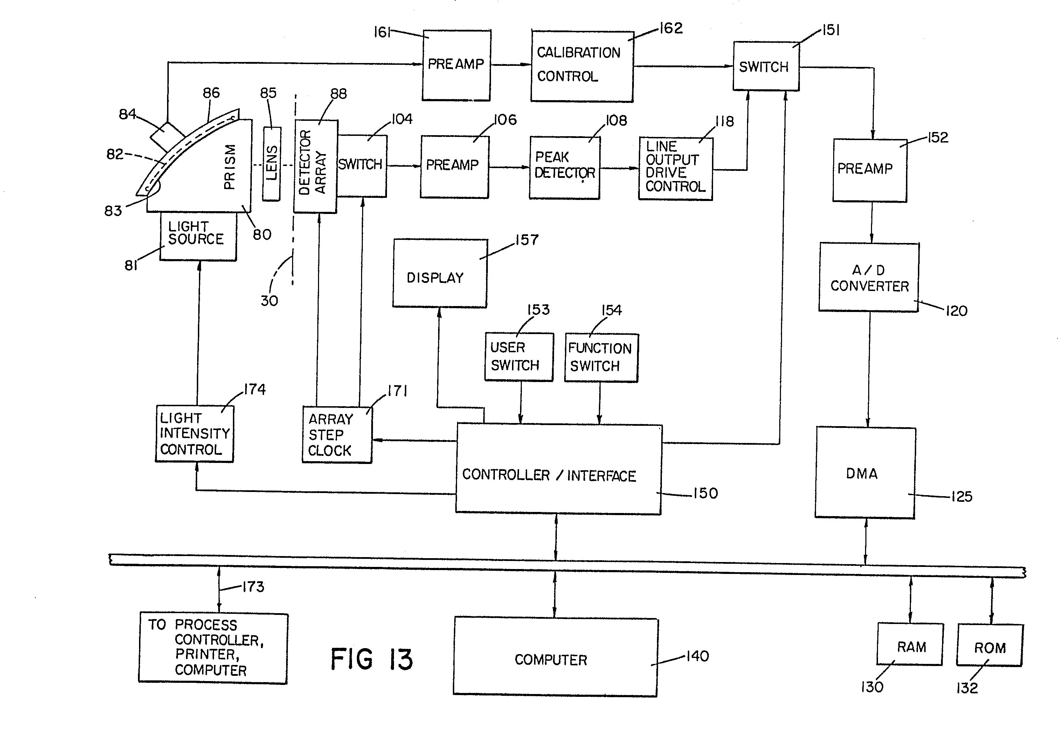

Referring now to Fig. 13, which is a block diagram of the instrument according to the preferred embodiment, the optical system is as shown in greater scale in Fig. 13, comprised of source 81, prism 80, lens 85 and image plane 30. Directly behind image plane 30 is photodiode array 88 comprised of 512 photodiodes over the 1/2 inch length.

All of the diodes are synchronized by the array start pulse of the central circuitry. A series of 512 array step pulses charge each photodiode singly to a common line which collects the amount of charge. Photons impinging on the diodes leak off the charge hence the recovered signal at the common line is the amount of charge it takes to recharge the diode. (Leakage currents will also cause a discharge current to take place.) The electronic switch 104 inside the photodiode array is controlled by a clocked shift register 171, which, for each pulse delivered to the array, charges in turn each individual diode. Also inside array 88 is another set of 512 dummy diodes which do not receive photons. These diodes are used to subtract the small switching transients which occur as each of the photodiodes is charged. Amplifier 106 is arranged as a differential preamplifier connected to the two common lines, one corresponding to the photodiodes and one corresponding to the dummy diodes.

This discharge for each diode is a pulse which is converted to an intensity in peak detector 108 where the discharging pulse produced by the single step is converted to a flat amplitude value. The final output signal at 118 consists of a sequence of 512 intensities, each representing a different voltage level for a different point of resolution along the image plane.

This photodiode array output is fed to switch 151, which also receives signals from the sample temperature sensor 84 through a circuit comprised of preamplifier 161 and calibration adjuster 162.

Switch 151 is electronically controlled by computer 140 (a purchased, external, 8-bit computer, of the type Model Z80 supplied by Mostek Corporation, of Carrollton, Texas) through controller/interface 150. This allows the instrument to measure sample temperature and make corresponding adjustments (according to conversion scales in the data base) to the refractive index reported. It also allows the option of displaying temperature directly to the user.

The output from switch 151 is fed through buffer preamplifier 152 to Analog-to-Digital converter 120 where the voltage measurements of light intensity and temperature are converted to digital signals.

The computer 140 does not operate quickly enough to collect the data directly from the 512 photodiodes, i.e. the computer cannot step the array, read the data then restep the array and reread the data. Therefore, the computer allows the array to step continuously and the conversions, made in the A/D converter 120, as soon as available are sent to a direct memory access (DMA) 125, i.e. an interface to the computer that is transparent to the program. As soon as the data becomes available it is placed in the memory and the computer then receives the data later at its slower operating speed. In fact, the desired 512 pieces of information can be placed into memory in .0004 of a second.

The primary functions of the controller/interface 150 are to interface with computer 140; to set up the source intensity 174; to set up the array stepping clock 171; to read switches located throughout the instrument, i.e. the user's option switch 153 and the various function switches 154 available; to control the display 157 to provide connection 173 to another computer or a printer and indeed to a process control unit which, in response to the continual reading of refractive index, adjusts a control parameter, e.g. flow of sugar, to control the process at a desired level of refractive index or Brix. The controller/interface 150 thus serves as a general purpose interface to the hardware devices for user input/output, i.e. display, switches and connections to the system.

Controller/interface 150 controls the step time of the photodiode array 88, i.e. the number of points per second that are analyzed, by means of array stepping clock 171 and switch 104. It also controls the light intensity of source 81 to the prism via light intensity controller 174. The combination of these two controls (171, 174) dictates the total amount of net energy received by photodiode array 88 by controlling the input energy generated by the source and the scan time. This allows computer 140 to dynamically adjust both the source intensity and the step time of the array to optimize both the speed and intensity for the best signal-to-noise ratio for detecting the signal.

Display output 157 and the outside printer or remote computer are controlled directly by computer 140 through the interface function. The computer, by multiplexing, can illuminate through software control any desired pattern on the display to the user, e.g. messages such as clean, or load. Switch 153 is a rotary switch on the rear panel which indicates various options, e.g. whether the instrument is reading Brix, i.e. sugar concentration; refractive index; concentration; or other programs stored by the user. The computer reads the switch and activates the proper display.

The purpose of DMA controller 125 is to suspend temporarily the operation of computer 140 and directly address the computer's memory to pack individual data points from diode array 88 into the computer's memory in known fashion. The DMA port is a highly intelligent controller device which is addressable by the computer. The computer, through the DMA, initiates the starting address in memory, its ending address, whether it is a transfer to or from memory, and the number of points to transfer. The computer sets these instructions by initiating requests into the DMA port. (While the data transfer is taking place, the computer can also check the status of the transfer process.) The chip is a standard DMA controller chip, of the type supplied by Intel Corporation of Santa Clara, California.

A computer program Read Only Memory (ROM) 132 is also interfaced with computer 140 providing a total of 4096 bytes. Since the computer 140 also contains 4096 bytes of program memory, the total program space is 8192 bytes.

Random Access Memory (RAM) 130 contains 2048 bytes to store the data points generated in scanning the array. The individual reading of the dark current intensity generates 512 data points and 512 data points are generated reading the intensity profile of the sample from the diode array. The remaining 1024 points are used for the storage of the normalized light intensity taken with no sample. The remaining 256 bytes of random access storage is contained on the computer 140.

Operation

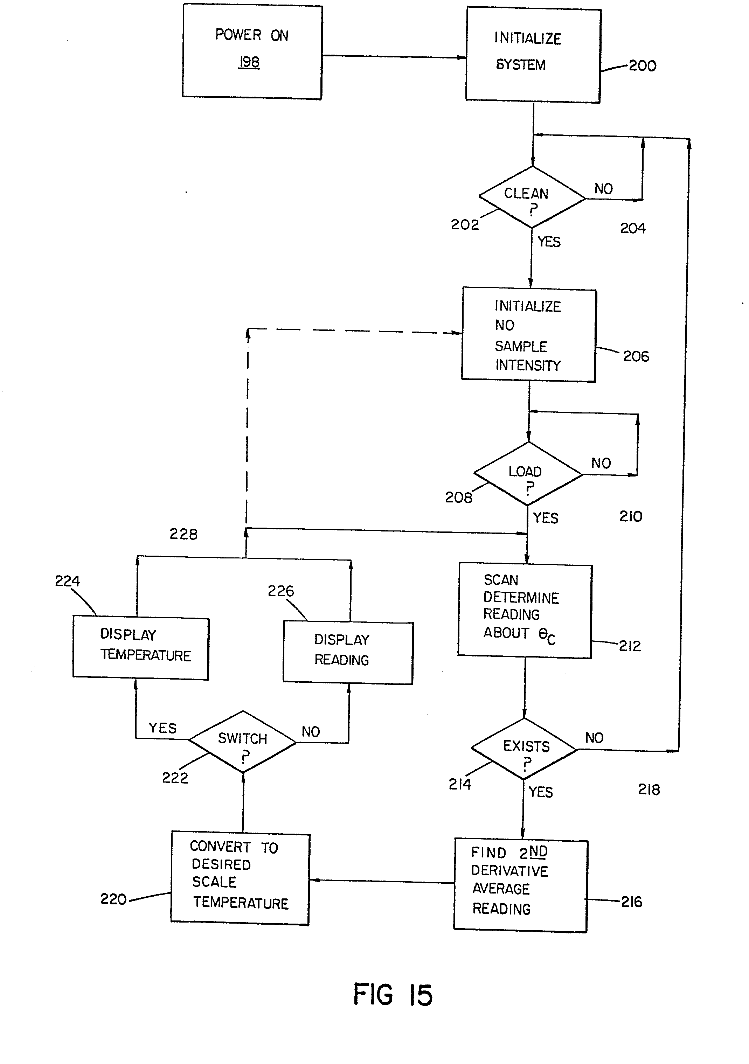

Referring now to Fig. 15, when power is first turned on 198 to the system, the computer goes through block 200, Initialize System, which clears memory, and initializes the options the user is going to use, e.g. measuring refractive index or Brix sugar concentration, or requesting outside printer connections. At the conclusion of the block, the computer is ready to start the main loop of its algorithm, which, in general, can be any algorithm that steps through the production of the intensity profile curve (or the set of points that define the curve) and performs the desired calculation of derivatives along the curve, and evaluation of these derivatives for the point of singularity.

According to the preferred embodiment the computer first displays (202) a message to the user, "Clean the prism.", and waits for the user to acknowledge (204) that the prism has been cleaned. The computer then enters a second block (206) to initialize the no-sample intensity measurements.

The computer turns off the source and takes readings of the detectors with no light present. This is the set of dark currents of the detectors, i.e. an error signal for each detector, which is automatically subtracted when the light currents are measured. The light source is then turned on. Through a dynamic algorithm, the computer adjusts the rate of scanning of the detectors so that signal strength received by the detectors is optimized. This is a function of time multiplied by light intensity to give the highest signal-to-noise detected signal to the preamplifier. If the intensity is low, the scan time is lowered and energy into the detector is increased. If the intensity is high, the scanning time is decreased. If the intensity is too low, the intensity of the source is increased until eventually the computer optimizes the normalized no-sample intensity received by the detectors. This will accommodate changes over time in detector sensitivity, individual sensor-to-sensor sensitivity, light source sensitivity, and preamplifier gain sensitivity. The initial dark currents are subtracted from the initial no-sample light currents for the normalized no-sample intensities which are stored in memory. These normalized scanned intensities need be collected only once a day during the use of the instrument.

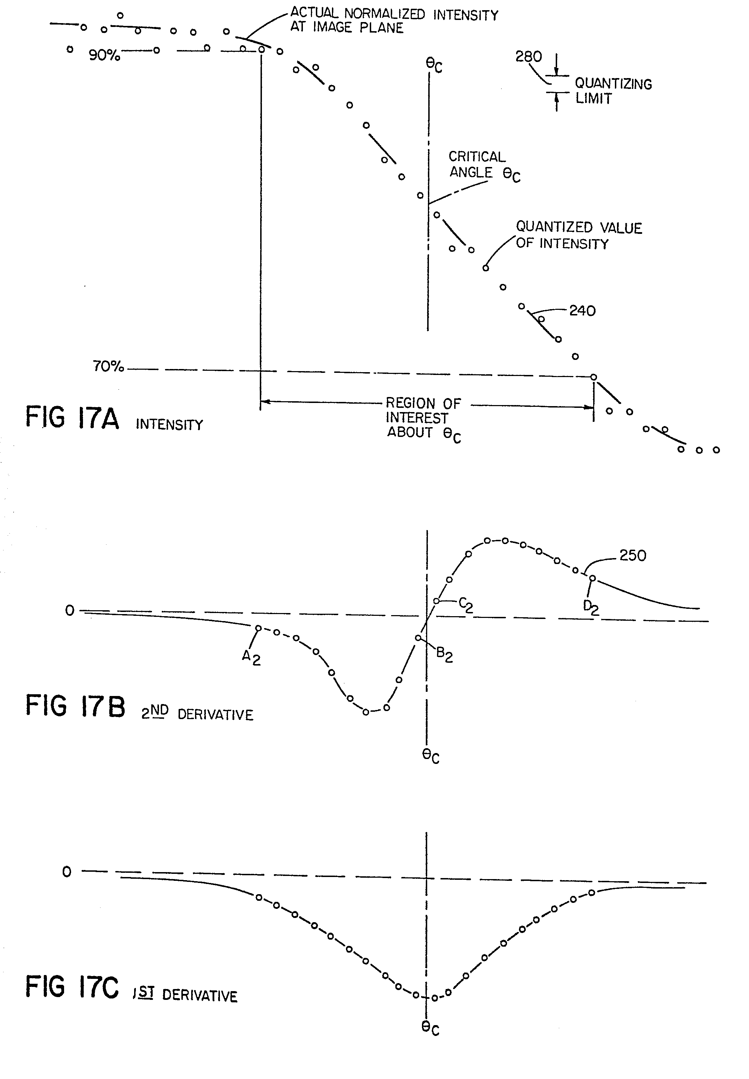

Referring now to Fig. 16, curve AA is a global representation of the 512 data points averaged and put into memory. The triple-hump shape of the over-all global picture is a function of light intensity. The individual fine detail varies from system to system. The overall triple shape is due to the characteristics of the source itself. The source in this instrument is a double die LED, each die approximately a millimeter square, the two dies spaced 2 millimeters apart. Due to the optics of the curved surface the two sources when focused on the flat image plane result in the triple hump picture. The instrument now stops (208, Fig. 15) and the user is directed to insert a sample on top of the prism. When this is acknowledged (210), the system rescans the array and accumulates 512 data points (Curve BB, Fig. 16). Up to point CC, curves AA and BB coincide, the coincidental section showing totally internally reflected rays (TIR). Beyond point CC, the two curves diverge.

The data is normalized, i.e. the ratio of curve BB to the initial curve AA is calculated. This normalized intensity is shown as curve DD (Fig. 16), shown with exaggerated quantizing error (actual measurement errors are of the order of one part in 255, or a little better than one half per cent).

The computer initially selects two predetermined intensity points to define the region of interest, e.g. 70 and 90% in devices using the Geake-type prism, or 100 and 80% for the flat prism, and scans (Block 212, Fig. 15) the entire intensity profile (curve DD) to locate the set of data points lying in the respective intensity region.

Referring to Fig. 17A, the points in curve 240 represent individual diodes out of the aggregate of 512. The quantizing limit 280 shown above curve 240 indicates that any one true data point can be only within that limit. The smooth curve is the actual normalized intensity and the dots represent the measured values achieved by the diodes at the image plane.

The initial region of interest, i.e. between 70 and 90%, typically encompasses 20 diode measurements which are used to find the critical angle, $\theta_c$. For each of these points the computer computes the second derivative (block 216) using 17 points, 8 above each point and 8 below each point, as an estimator. Thus the set of 20 intensity points produces a set of 20 points of the second derivative. Curve 250 in Fig. 17B shows the second derivative increasing negatively to a maximum, passing through 0 between points B2, C2, going to a maximum positive and returning back to the base line. Point A2 is computed from 17 points and represents the second derivative at the beginning of the region of interest. Point D2 is computed from 17 points also and represents the second derivative at the end of the region of interest.

The use of the second derivative is a computational convenience. The singularity of the first derivative is the indicator of the refractive index, but is harder to implement than computation of the second derivative. The first derivative approximate singularity will occur when the second derivative passes through zero. Therefore, the second derivative is used since it is simpler to find the zero point rather than a maximum point.

By known means the computer now searches between A2 and D2, which are below and above the zero value, respectively, to find two points within the region of interest, i.e. B2 and C2, one of which is below zero and one of which is above zero. These two points encompass the critical angle point. Both B2 and C2 (similar to A2 and D2) are computed from 17 points. $\theta_c$ is now computed from points B2 and C2 by linear interpolation. In the case shown in the figure, the critical angle is approximately halfway between B2 and C2. If, e.g., the diode number associated with the B2 point were diode number 400, the diode for C2 would be 401 and the critical angle lies approximately at diode 401.5. The linear interpolation fractionally splits a single diode into 16 separate parts to determine the shadow region of 1.33 to 1.53 to a resolution of a total of 8000 points.

In the event that a zero crossing of the second derivative does not exist within the initial region of interest, the computer program is arranged to change the amplitude limits and rescan the data with different amplitude criteria. A nonexisting zero crossing implies that all computations are of the same sign. If, for example, all second derivatives were negative (positive) the computer is programmed to automatically lower (raise) the values of the region of interest and thus create a zero crossing of the second derivative which can be detected and treated as a singular property.

The second derivative, once found, is maintained in memory while the process is repeated. The results of each retest are accumulated and averaged producing an average diode number for the critical angle.

By this process, diodes above and below the critical angle are used in obtaining the values. In theory the minimum number of diodes that could be employed in this computation is three, but, due to quantizing errors in the system, the more diodes used in the calculation, the more accurate the result. Information along the Fresnel intensity curve is therefore obtained from a number of diodes which contribute in a voting means to the critical angle calculation.

- 26 -

Once the critical angle is obtained, it is converted (block 220, Fig. 15) to the desired scale and compensated for temperature to report to the user selected results, e.g. refractive index, Brix concentration, or temperature compensated Brix. All conversions are performed by simple mathematical inverse computations according to known relationships.

The user is given an option (block 222) to read the calculated result or read the temperature of the sample by depressing the front panel switch. The computer displays (block 224, 226) the reading selected and then repeats (228) the entire process, continuing in this fashion at approximately 4 times per second to recalculate critical angle $\theta_c$ as a moving average. The computer leaves the continuous loop when it finds that no sample exists, i.e. (block 214, Fig. 15) there are no points in the 70 to 90 per cent intensity region of interest. If the sample is removed the algorithm will find a uniform normalized intensity of 1 across the entire range of the instrument and will return to the clean step and restart the program.

After inserting another sample, as the computer has already taken a no-sample intensity, it immediately goes into the scan mode to scan for the second derivative. If, however, the power is turned off to the instrument and then turned on, the program runs through the initialize block to reinitialize its normalized intensities before beginning the sample testing cycle.

### Usefulness With Previously Unmeasurable Samples

Generally, samples with undissolved solids will scatter the refracted light back into the prism of a refractometer and broaden the curve. Often these samples cannot be measured at all in existing instruments. Traditionally, such samples must first be filtered to remove undissolved solids and then measured. For many reasons this filtering may be impractical (e.g. process control, or oxidation effects). Because of the lack of good measurements, certain processes have therefore been inaccurately controlled.

According to the preferred embodiment of the invention, such samples may possess very wide shadows where the region of interest encompasses many more diodes than in an ideal liquid. In these samples, however, the techniques of the invention are still applicable and useful readings can often be obtained. This can be done by determining the point of maximum value of the first derivative, or zero crossing of the second derivative, (per the preferred embodiment) or determining a match between the shape of the detected curve with a stored previously known curve in a set of curves produced by fluids of known refractive index or concentration of ingredients. The finding of a "singularity" on the intensity profile by such techniques can still satisfy the two criteria of a measuring instrument, i.e. the determination is repeatable, i.e. if the sample is identical, the same point is found and the singular property is correlatable to the desired measurement, i.e. a 1:1 correspondence exists between the singular property and the desired measurement. These two criteria allow the instrument to be calibrated to the desired measurement.

## Other Embodiments

Other embodiments of the invention are within the following claims. For example, the optical system may employ a flat prism in place of the preferred Geake-type prism. This would usually require a different definition of the initial region of interest, e.g. 100 percent to 80 percent versus 70 percent to 90 percent with the preferred Geake-type system, and, whereas the flat prism has an arc sine mapping of $\theta_c$ to refractive index, in contrast to the linear mapping of the Geake-type prism, an extra computational step would normally be required.

A higher speed computer could also be employed to provide direct processing of the data without the necessity of the direct memory address port. This is presently less preferred for reasons of cost.

The instrument is also provided with means for access to outside data supplies which could be used for conversion of the critical angle measurement to displays of information more of interest to the user, e.g. alcohol content in water or concentration percentage by weight of an arbitrary sample in solution.

Furthermore, while it is easier to find a crossing of zero than it is to find a maximum first derivative as shown in Fig. 17C, the maximum first derivative also occurs at the approximate singularity corresponding to the critical angle $\theta_c$. The critical angle $\theta_c$ can therefore be determined by means of known first derivative algorithms without forming the second derivative. Indeed, as previously suggested, there are other means known in the field of curve fitting and analysis for effectively determining the location of a singular feature of the intensity profile, from which can be determined the refractive index, using the broad principles of the invention.

What is claimed is:

1. In a refractometer comprising a prism (80 Figs. 13 and 14) having a face (83 Figs. 13 and 14) exposed for interfacial contact with a substance (82 Figs. 13 and 14) whose index of refraction is to be measured, a light source (81 Figs. 13 and 14) for directing rays of light through the prism over a range of angles toward said interface with said substance,

a detector (88 Figs. 13 and 14) for detecting said rays of light that are reflected from the interface through the prism or are refracted from the interface into the medium,

and means (Fig. 13) for estimating the refractive index of the substance on the basis of the light reflected or refracted from said interface,

c h a r a c t e r i z e d  in that said refractometer comprises means (88) for detecting an intensity profile of the reflected or refracted rays throughout a range of angles of incidence of said rays, and

intensity profile analyzer means (Fig. 13) adapted to locate the position of a singular property of the resultant intensity profile curve as a function of a multiplicity of at least three intensity values along said intensity profile and for indicating the index of refraction of said substance from the location of said singular property.

2. The refractometer of claim 1 c h a r a c t e r i z e d  in that said intensity profile analyzer means (Fig. 13) is implemented as a derivative forming means for forming a derivative of said resultant intensity profile curve, and said singular property of said intensity profile curve is the approximate singularity of a first derivative (Fig. 17c).

3. The refractometer of claim 2

c h a r a c t e r i z e d  in that

said derivative forming means is adapted to form the second derivative of said curve,

and said decision means of said analyzer means is adapted to determine the location of said approximate first derivative singularity as the point where said second derivative crosses zero value.

4. The refractometer of claim 1

c h a r a c t e r i z e d in that

said refractometer further includes scanning means for scanning said intensity profile for a region of interest in which said singular property is predicted to occur.

5. The refractometer of claim 1

c h a r a c t e r i z e d  in that

said refractometer further includes means for comparing said measured profile against a reference to remove variations attributable to variations in the light intensity attributable to said light source.

6. The refractometer of any of the preceding claims 1 to 5

c h a r a c t e r i z e d  in that

said prism (80) comprises a section of a cylinder, said interface (82) being along the curved surface of said cylinder, said prism adapted to focus only one critical angle ray perpendicular to an image plane (30 Fig. 13) of said prism which lies in a radius of said cylindrical surface, said partially reflected rays striking on said prism and image plane both above and below the point corresponding to said critical angle position ( $_c$ Figs. 2, 3 and 5), the position of the intensity profile shifting linearly along the image plane with change in critical angle.

7. The refractometer of claim 6

c h a r a c t e r i z e d  in that

said analyzer means is adapted initially to select the region of interest (Fig. 17a) to be analyzed to be points on said intensity profile between about 70 and 90% of maximum normalized intensity.

8. The refractometer of any of the preceding claims 1 to 5

c h a r a c t e r i z e d  in that

said prism is a flat prism.

9. The refractometer of claim 8

c h a r a c t e r i z e d  in that

said analyzer means is adapted initially to select the region of interest to be analyzed to be points on said intensity profile between about 80 and 100% of maximum normalized intensity.

10. The refractometer of claim 1

c h a r a c t e r i z e d   in that

said refractometer further includes means for compensation for dark current characteristics of said detector.

11. The refractometer of claim 1

c h a r a c t e r i z e d   in that

said detector includes a linear array of discrete sensor elements (88 Figs. 13 and 14).

12. A method for measuring the index of refraction of a substance comprising exposing a face (83) of a prism (80) for interfacial contact with said substance (82), directing rays of light from a light source (81) through the prism over a range of angles toward said interface with said substance,

detecting said rays of light that are reflected from the interface through the prism or refracted from the interface into the medium,

and estimating the refractive index of the substance on the basis of the light reflected or refracted from said interface,

c h a r a c t e r i z e d   in that

the method comprises detecting an intensity profile of the reflected or refracted rays throughout a range of angles of incidence of said rays,

and analyzing said intensity profile by forming a derivative of the resultant intensity profile curve as a function of a multiplicity of at least three intensity values along said intensity profile for locating the approximate singularity of said first derivative, and

indicating the index of refraction of said substance from the location of said singularity.

13. The method of claim 12 characterized in that the second derivative of said curve is formed to determine the location of said first derivative singularity as the point where said second derivative crosses zero value.

14. The method of claim 12 characterized in that the method further includes the step of scanning said intensity profile for a predetermined region of interest for intensity profile analysis.

15. The method of claim 14 characterized in that the method includes dynamically varying the effective zero level to search for the point of said second derivative which crosses the adjusted zero level.

16. A method of conducting a liquid processing operation with the aid of a digital computer,

c h a r a c t e r i z e d  in that

the method comprises:

providing said computer with a data base including at least,

a constant dependent upon the refractive index ($N_d$) of one substance at an interface,

sine conversion data (sin), and

refractive index conversion data for a characteristic of a substance to be monitored,

exposing a face (83) of a prism (80) for interfacial contact with a substance (82),

directing rays of light from a source (81) through the prism over a range of angles toward said interface with said substance,

initiating an array stepping clock (171 Fig. 13) in said computer to sequentially step a multiplicity of detectors (88) along an image plane (30) of said prism to detect said rays of light that are reflected from said interface through said prism or refracted from said interface into the medium,

providing to said computer an intensity reading from each said multiplicity of detectors,

providing said computer with the temperature in the proximity of said interface,

repetively calculating in the computer, at frequent intervals, a derivative of the curve of said intensity profile plotted from said multiplicity of detected rays to determine an approximate singularity of the curve corresponding to a critical angle value measured from the normal to said interface, above which said light rays are totally reflected from said interface and below which said light rays are only partially reflected from said interface,

calculating in the computer from said critical angle ($\theta_c$) the refractive index ($N_s$) of said substance according to Snell's Law equation:

$$N_s = N_d \sin \theta_c$$

and repetitively comparing in said computer at frequent intervals the calculated value of $N_s$ to the desired refractive index of the substance, and

adjusting processing conditions as required to conform said calculated value of refractive index with said desired value.

17.  The method of claim 16

c h a r a c t e r i z e d  in that

said data base is furthered comprised of conversion data for refractive index to temperature, and the method further comprises

selectively providing the computer with temperature data, and

converting in the computer the calculated refractive index to a value corrected for temperature.

0071143

1/7

FIG 1

FIG 2

FIG 3

FIG 4

2/7

$n_s$

$n_d$

12

52

53

58

57

56

54

55

8

$\theta_C$  $\theta_C$

4

B

A

C

30

**FIG 5**

I

100

0°  $\theta_C$  90°

**FIG 6**

I

102

0°  $\theta_C$  90°

**FIG 7**

I

104

0°  $\theta_C$  90°

**FIG 8**

FIG 9

FIG 10

FIG 11

FIG 12

FIG 13

FIG 14

INTENSITY 0-255

REGION OF INTEREST

DIODE #0 TO #511

FIG 16

6/7

```
┌─────────────┐          ┌─────────────┐
│  POWER ON   │─────────▶│ INITIALIZE  │
│    198      │          │  SYSTEM     │───200
└─────────────┘          └─────────────┘
                                │
                                ▼
                          ◇─────────◇   NO
                    202──◇ CLEAN ? ◇──────────▶
                          ◇─────────◇    204
                               │ YES
                               ▼
                         ┌─────────────┐
                         │ INITIALIZE  │
                ┌ ─ ─ ─ ▶│    NO       │
                         │  SAMPLE     │───206
                         │ INTENSITY   │
                         └─────────────┘
                               │
                               ▼
                          ◇─────────◇   NO
                    208──◇  LOAD ?  ◇──────────▶
                          ◇─────────◇    210
                               │ YES
                               ▼
                         ┌─────────────┐
                         │    SCAN     │
                         │ DETERMINE   │
                         │  READING    │
                         │ ABOUT θ_C   │───212
                         └─────────────┘
                               │
                               ▼
                          ◇─────────◇   NO
                    214──◇ EXISTS ? ◇──────────▶
                          ◇─────────◇    218
                               │ YES
                               ▼
                         ┌─────────────┐
                         │  FIND 2ND   │
                         │ DERIVATIVE  │
                         │  AVERAGE    │
                         │  READING    │───216
                         └─────────────┘
```

224 — DISPLAY TEMPERATURE   226 — DISPLAY READING

228

222 — SWITCH ?   YES / NO

220 — CONVERT TO DESIRED SCALE TEMPERATURE

FIG 15

ACTUAL NORMALIZED INTENSITY
AT IMAGE PLANE

$\theta_C$

280 — QUANTIZING
LIMIT

90%

CRITICAL
ANGLE $\theta_C$

QUANTIZED VALUE
OF INTENSITY

240

70%

**FIG 17A** INTENSITY

REGION OF
INTEREST
ABOUT $\theta_C$

250

$C_2$

$A_2$

$B_2$

**FIG 17B** 2ND DERIVATIVE

$D_2$

$\theta_C$

0

**FIG 17C** 1ST DERIVATIVE

$\theta_C$

## EUROPEAN SEARCH REPORT

**European Patent Office**

Application number

EP 82 10 6483.9

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | G 01 N 21/43 |
| X | DE - B - 1 022 390 (C. ZEISS)  * claims 1, 5; column 1, line 1 to column 2, line 50; column 3, line 10 to column 4, line 60; fig. 1a to 1d, 2, 3 * | 1-3,8, 12,13 | |
| A | WO - A1 - 81/00152 (A/S N. FOSS ELECTRIC)  * claims 1, 5, 6, 9, 11, 22, 24, 27, 45; page 11, line 29 to page 13, line 36; fig. 5, 6, 10 * | 1-4.8, 12-14 | TECHNICAL FIELDS SEARCHED (Int.Cl. 3) |
| D,A | GB - A - 2 008 793 (ANACON LTD.)  * claim 1; fig. 1, 2 * | 1,11, 12 | G 01 N 21/00 |
| P,A | GB - A - 2 087 554 (H. NORRIS)  * claims 1, 8, 13, 16 to 18, 25, 30, 33, 34; page 3, line 74 to page 4, line 20; fig. 1, 3, 6A to 6C * | 1,8, 12,16, 17 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| Place of search | Date of completion of the search | Examiner |
|---|---|---|
| Berlin | 09-09-1982 | HOFMANN |

The present search report has been drawn up for all claims

EPO Form 1503.1 06.78